**Europäisches Patentamt**

**European Patent Office**

**Office européen des brevets**

(19)

(11) Veröffentlichungsnummer: **0 171 103**
**B1**

(12)

# EUROPÄISCHE PATENTSCHRIFT

(45) Veröffentlichungstag der Patentschrift:
**21.09.88**

(51) Int. Cl.⁴: **C 03 B 37/014**, C 03 B 23/04

(21) Anmeldenummer: **85201066.9**

(22) Anmeldetag: **03.07.85**

(54) **Verfahren zum Herstellen massiver gläserner Vorformen aus hohlen Vorformen.**

(30) Priorität: **13.07.84 NL 8402225**

(43) Veröffentlichungstag der Anmeldung:
**12.02.86 Patentblatt 86/7**

(45) Bekanntmachung des Hinweises auf die Patenterteilung:
**21.09.88 Patentblatt 88/38**

(84) Benannte Vertragsstaaten:
**BE DE FR GB IT NL SE**

(56) Entgegenhaltungen:
**FR-A-2 436 111**
**US-A-4 292 063**

(73) Patentinhaber: **N.V. Philips' Gloeilampenfabrieken,
Groenewoudseweg 1, NL- 5621 BA Eindhoven (NL)**

(72) Erfinder: **Pluijms, René Andreas Maria, p/a INT.
OCTROOIBUREAU B.V. Prof. Holstlaan 6, NL-
5656 AA Eindhoven (NL)**
Erfinder: **de Ruiter, Jacob Willem, p/a INT.
OCTROOIBUREAU B.V. Prof. Holstlaan 6, NL-
5656 AA Eindhoven (NL)**
Erfinder: **Schrans, Hubertus Johannes E. M., p/a
INT. OCTROOIBUREAU B.V. Prof. Holstlaan 6,
NL- 5656 AA Eindhoven (NL)**
Erfinder: **de Meij, Johannes Petrus, p/a INT.
OCTROOIBUREAU B.V. Prof. Holstlaan 6, NL-
5656 AA Eindhoven (NL)**

(74) Vertreter: **Auwerda, Cornelis Petrus,
INTERNATIONAAL OCTROOIBUREAU B.V. Prof.
Holstlaan 6, NL- 5656 AA Eindhoven (NL)**

LIBER, STOCKHOLM 1988

**Beschreibung**

Die Erfindung bezieht sich auf ein Verfahren zum Herstellen massiver gläserner Vorformen zum Herstellen optischer Elemente, wobei eine hohle Vorform aus einem an der Innenseite mit dotierten Quarzglas beschichteten Quarzglasrohr mit einer für das gesetzte Ziel geeigneten Änderung der Brechzahl über die Wanddicke durch Erhitzung kontrahiert wird unter Anwendung einer Wärmezone, deren Abmessung in der Längsrichtung der Vorform kleiner ist als der zu kontrahierende Teil derselben ist und die Wärmezone und die hohle Vorform relativ zu einander in der Langsrichtung der Vorform bewegt werden. Ein dergleiches Verfahren ist zum Beispiel aus der FR-A-2 436 111 bekannt.

Die Kontraktion erfolgt dabei unter dem Einfluss der Oberflächenspannung des erhitzten Quarzglases und unter dem Einfluss etwaiger Druckunterschiede.

Aus massiven Vorformen, die mit dem erfindungsgemässen Verfahren erhalten sind, lassen sich durch Ziehen optische Fasern herstellen. Linsen können aus massiven Vorformen mit gradueller Verteilung der Brechzahl dadurch hergestellt werden, dass die Vorform zu Scheiben einer geeigneten Dicke aufgeteilt wird.

Verfahren zum Herstellen von hohlen Vorformen sind an sich bekannt. Es kann beispielsweise auf den Übersichtsartikel von G. J. Koel in "Proc. 8th European Conf. on optical Communication" (8 ECOC), September 1982, Seiten 1 bis 18, verwiesen werden.

Für innenbedeckte Quarzröhren liegt die Kontraktionstemperatur zwischen etwa 1900 und 2200° C. Im allgemeinen werden zum Kontrahieren innenbedeckter Quarzröhren Wasserstoff-Sauerstoffbrenner benutzt. In der Praxis beträgt die Temperatur einer Flamme einer derartigen Brenners meistens nicht mehr als 2500° C. Der Wärmefluss ist dadurch relativ gering und die Zeit, die notwendig ist um eine vollständige Kontraktion zu einer massiven Vorform zu bewirken, ist relativ lang, insbesondere wenn es sich um hohle Vorformen grossen Durchmessers handelt. Die Wärmeübertragung erfolgt durch Übertragung kinetischer Energie von Gasmolekülen zum Glas.

Eine relativ lange Kontraktionszeit erfordert weitere Massnahmen um die Verdampfung relativ flüchtiger Teile zu unterdrucken oder die Nachteile davon auszuschalten, beispielsweise dadurch, dass die Schicht aus der ein flüchtiger Bestandteil verdampft ist, unmittelbar vor dem Schliessen des Hohlraumes in der Vorform weggeätzt wird. Diese Massnahmen sind jedoch schwer beherrschbar und es erfordert viel Aufwand um reproduzierbare Resultate zu erzielen. Es ist weiterhin von grosser Bedeutung, dass beim Kontrahieren eine gute Geometrie beibehalten wird, d. h. dass beim Kontrahieren keine Unrundheit, kein Biegen oder Ausdehnen der Vorform auftritt. Dies ist insbesondere von Bedeutung wenn die massive Vorform wieder in ein Quarzrohr gesteckt und zusammen mit diesem Rohr zu einer optischen Faser ausgezogen wird.

Ungleichmässige Erwärmung der hohlen Vorform und ein ungleichmässiger Druck auf die Aussenseite der Vorform soll deswegen während der Kontraktion möglichst vermieden werden.

Die Erfindung hat nun zur Aufgabe, den Wärmefluss zu dem zu kontrahierenden Rohr wesentlich zu vergrössern und andere Probleme, die beim Kontrahieren mit beweglichen Brennern auftreten können, möglichst auszuschalten bzw. zu vermeiden.

Diese Aufgabe wir nach der Erfindung gelöst mit einem Verfahren der Eingangs genannten Art, das das Kennzeichen aufweist, dass die hohle Vorform beim Kontrahieren an der Aussenseite mit einem Plasma erhitzt wird. In der Praxis wird ein isothermes Plasma verwendet, mit dem Temperaturen verwirklichbar sind, die hoch genug sind um Kontrahieren eines Quarzrohres im wesentlichen unter dem Einfluss der Oberflächenspannung bewirken zu können. Unter einem isothermen Plasma wird ein Plasma verstanden, von dem alle Bestandteile (Elektronen, Atome, Ionen, usw.) eine gleich hohe Temperatur aufweisen.

In der Praxis hat es sich herausgestellt, dass durch Verwendung eines Plasmas die Kontraktionszeit wesentlich gekürzt werden kann. Dies bedeutet, dass eine wesentliche Beschleunigung des Herstellungsverfahrens möglich wird. Dies ist insbesondere der Fall, wenn nach einer bevorzugten Ausführungsform des erfindungsgemässen Verfahrens ein Plasmagas verwendet wird, das völlig oder teilweise aus mindestens einem dissoziierbaren molekularen Gas besteht, wie Stickstoff und/oder Sauerstoff. Ein derartiges Plasma besteht wenigstens zum Teil aus dissoziierten Molekülen. Beim Aufprall an der Glasoberfläche werden Molekühle des Gases zuruckgebildet. Ausser kinetischer Energie kommt der Glasoberfläche auch Bildungswärme dieser Molekole frei. Je Zeiteinheit ist die Menge zu der glasoberfläche übertragener Energie grösser als bei Gasbrennern oder Plasmen auf Basis atomarer Gase möglich ist.

Es wird darauf hingewiesen dass aus der US-A-4 402 720 ein Verfahren bekannt ist, wobei eine hohle Vorform, die dadurch erhalten wird, dass auf einen Dorn Glasteilchen schichtweise abgesetzt werden, wonach der Dorn entfernt wird, and der Aussenseite erweicht wird mit Hilfe einer Plasmaflamme, wonach die Vorform kollabiert wird.

Andere Vorteile, die mit dem erfindungsgemässen Verfahren erzielt werden können, sind die folgenden:

das Verfahren kann in einer staubfreien Gasatmosphäre durchgeführt werden, die frei ist von Verunreinigungen, welche die mechanischen und/oder optischen Eigenschaften aus der Vorform herzustellender optischer Elemente, wie optischer Fasern, beeinträchtigen könnten. Das Kontrahierverfahren kann beispielsweise in einer Atmosphäre durchgeführt werden, die völlig oder teilweise aus Sauerstoff besteht. In der Praxis hat es sich herausgestellt, dass eine Sauerstoffatmosphäre die Verdampfung von Siliziumdioxid von der Aussenseite der hohlen Vorform verringert. Auch wird die Reduktion zu Siliziummonooxid dabei vermieden.

Das Plasma kann in einer Argonatmosphäre gezündet werden; dem Argon wird daraufhin Sauerstoff oder Luft zugefügt, so dass eine sauerstoffhaltige Atmosphäre entsteht. Gegebenenfalls kann das Argon durch Sauerstoff völlig ersetzt werden. Ein geeignetes Plasmagas besteht aus 33 Vol.-% Argon und 67 Vol.-% Luft.

Bei manchen Ausführungsformen ist es vorteilhaft die hohle Vorform beim Kontrahieren zu drehen. Dies ist insbesondere der Fall, wenn die Vorform nicht allseitig von einem Plasma umgeben wird, sondern der Plasmabrenner in einem Winkel grösser als 0° auf die Achse der hohlen Vorform gerichtet ist. Die Drehgeschwindigkeit beträgt dabei 0,5 bis 5 Umdrehungen/Sekunde. Beim Drehen der hohlen Vorform soll vermieden werden, dass Schwingungen auftreten; in der Praxis haben sich Drehgeschwindigkeiten von 0,5 bis 2 Umdrehungen/Sekunde bewährt. Durch diese Massnahmen wird erreicht, dass unter allen Umständen eine gleichmässige Kontraktion der hohlen Vorform erfolgt.

Bei einer praktischen Ausführungsform erfolgt die Erhitzung mit einem Plasmabrenner, bei dem die Strömungsrichtung des Plasmagases in einem Winkel von etwa 90° auf die Achse der hohlen Vorform gerichtet ist. Vorzugsweise liegt dabei die Achse des Plasmabrenners nicht horizontal und ist derjenige Teil des Brenners aus dem die Plasmaflamme austritt nach oben gerichtet. Bei einer derartigen Anordnung wird die Symmetrie des Plasmas und damit die gleichmässige Erhitzung des Werkstücks durch die Schwerkraft möglichst wenig beeinträtigt. Dies ist insbesondere der Fall wenn die Achse des Brenners senkrecht auf die Horzontalebene gerichtet ist.

Beim Kontrahieren der hohlen Vorform wird vorzugsweise wie folgt verfahren.

Die hohle Vorform in Form eines Rohres aus Quarzglas, das auf der Innenseite mit dotiertem Quarzglas bedeckt wird, wird mittels drehbarer Halterungen horizontal eingespannt. Diese Halterungen können derart ausgebildet sein, dass beim Drehen ein Gas durch das Rohr hindurchgeführt werden kann. Eine derartige Vorkehrung kann erwünscht sein um beim Kontrahieren bestimmte gewünschte Effekte zu bewirken. Daraufhin wird der Plasmabrenner gezündet und der Brenner mit einer ausreichend niedrigen Geschwindigkeit an der sich drehenden Vorform entlang geführt um eine Kontraktion durch Erhitzung zu bewirken. Es ist dabei nicht empfehlenswert, die Kontraktion zu einem festen Stab in nur einem Schritt erfolgen zu lassen. Dazu ist eine derart hohe Temperatur notwendig, dass ein grosser Abbrand des Quarzglases berücksichtigt werden muss. Nachdem der für Kontraktion in Frage kommende Teil der Vorform durch das Plasma völlig erhitzt wurde, wird das Plasma in der anderen Richtung mit einer ausreichend hohen Geschwindigkeit in die Ausgangsstellung zurückbewegt um eine wesentliche Wärmeübertragung bei dieser Bewegung zu vermeiden. Gegebenenfalls kann bei der Rückbewegung Kontakt der hohlen Vorform mit dem Plasma vermieden werden. Auf diese Weise wird vermieden, dass bei dem nächsten Kontraktionsschritt durch die beim Rücklauf aufgenommene Wärmeenergie die Kontraktion inhomogen beeinflusst wird. Daraufhin wird das Plasma abermals an der Vorform entlang bewegt. Abhängig vom Durchmesser des zu kollabierenden Rohres und von der Glasmenge kann nun alles wiederholt werden. Bei jedem folgenden auf diese Weise durchgeführten Kontraktionsschritt wird die Geschwindigkeit, mit der das Plasma an der hohlen Vorform entlang geführt wird, kleiner gewählt.

Im Grunde sind u. a. die folgenden Ausführungsformen des Verfahrens möglich:

A. Die zu kontrahierende hohle Vorform wird von einem Plasma allseitig umgeben; dabei wird ein Plasmabrenner verwendet, der die Vorform umgibt und gegenüber dem Rohr bewegt wird.

B. Die zu kontrahierende hohle Vorform wird gedreht und durch eine aus einem Plasmabrenner heraus tretende Plasmaflamme erhitzt. Die Vorform und die Plasmaflamme werden gegenübereinander bewegt.

Im Grunde kann in den beiden Ausführungsformen die zu kontrahierende Vorform horizontal bzw. vertikal angeordnet sein.

Zwei Ausführungsformen des erfindungsgemässen Verfahrens sind in der Zeichnung dargestellt und werden im folgenden näher beschrieben. Es zeigen

Fig. 1 eine schematische Darstellung eines Teils einer Vorrichtung zum Kontrahieren eines Glasrohres, wobei das Rohr von einem Plasma allseitig umgeben wird (Ausführungsform A);

Fig. 2 eine schematische Darstellung eines Teils einer Vorrichtung zum Kontrahieren eines Glasrohres, wobei das Rohr gedreht und mit einer Plasmaflamme erhitzt wird (Ausführungsform B).

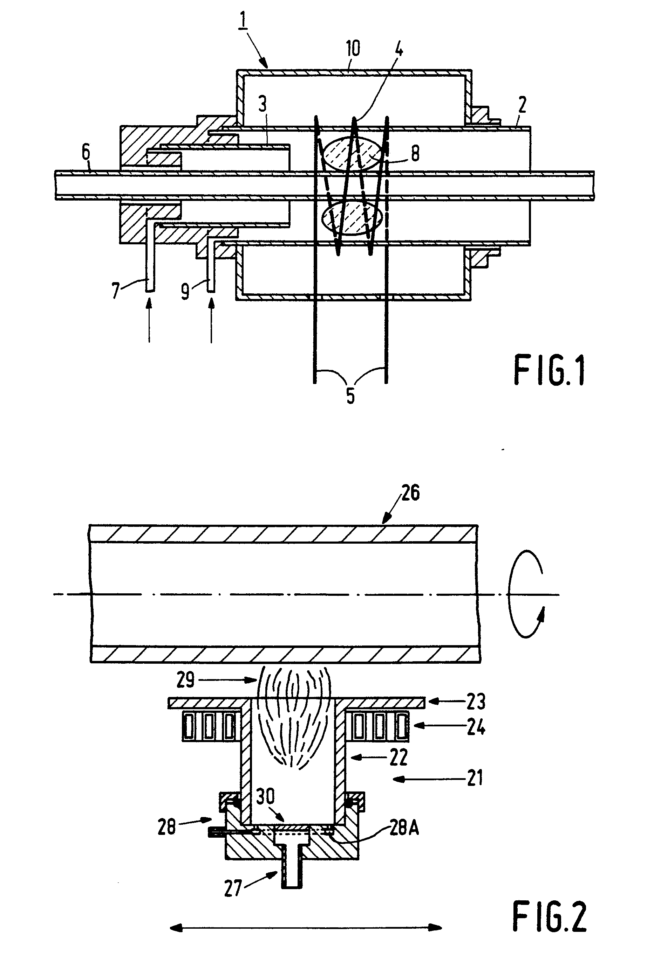

Der in Fig. 1 dargestellte Plasmabrenner 1 besteht im wesentlichen aus zwei Quarzröhren 2 und 3 und einer Spule aus zwei Wicklungen 4; die Spule ist über ein biegsames Kabel 5 mit einem (nicht dargestellten) HF-Generator verbunden. Der Plasmabrenner 1 wird mit Hilfe einer nicht dargestellten Vorrichtung an dem Rohr 6 entlang hin- und herbewegt. Am Anfang wird über die Gaszufuhr 7 Argon seitlich in die Vorrichtung eingeblasen, so dass um das Rohr 6 ein wirbelnd beweglicher Gasmantel entsteht in der Röhre 3, die sich in der Röhre 2 fortsetzt. Das Plasma 8 wird nun gezündet. Durch die Gaszufuhr 9 wird Luft langs der Wand der Röhre 2 geblasen um diese zu kohlen, wodurch das Plasma in einem Abstand von der Wand gehalten wird. Der Plasmabrenner wird mit einem zylinderförmigen Schutzelement 10 aus Aluminium, worin Luft vorhanden ist, die (nicht dargestellt) kontinuierlich erneuert wird, abgeschirmt.

Vorzugsweise wird das Plasma mittels eines elektrischen Wechselfeldes mit einer Frequenz von weniger als 12 MHz aber mit einer ausreichend hohen Frequenz um in der verwendeten Gasatmosphäre, welch das kontrahierende Rohr umgibt, ein Plasma zünden und beibehalten zu können, induktiv erzeugt. Bei Anwendung dieser relativ niedrigen Frequenz des elektrischen Wechselfelds ist der Raum zwischen dem zu kontrahierenden Rohr 6 und der Röhre 2 des Plasmabrenners 1 während des ganzen Kontraktionsverfahrens nach wie vor mit Plasma gefüllt. Wenn die Frequenz über 12 MHz gewählt wird, ist dies nicht immer mehr der Fall. Beim Kontrahieren besteht dann die Gefahr, dass die Aussenoberfläche des kontrahierenden Rohres bei einem gewissen Durchmesser kleiner als der Ausgangdurchmesser nicht mehr von dem Plasma berührt und die Wärmeübertragung dadurch zu klein wird um eine vollständige Kontraktion zu einem massiven Stab bewirken zu können. Bei einer relativ niedrigen Frequenz, weniger als 12 MHz stellt es sich heraus, dass das Plasma ausreichend symmetrisch ist um das Kontraktionsverfahren nach einer weiteren bevorzugten Ausführungsform des erfindungsgemässen Verfahrens in horizontal er Lage des zu kontrahierenden Rohr es durchzuführen.

Ein weiterer Vorteil der Anwendung eines elektrischen Wechselfeldes mit einer relativ niedrigen Frequenz ist, dass keine Vorkehrungen getroffen zu werden brauchen um Überschläge zwischen den Windungen der Spule zu vermeiden.

In der Praxis hat es sich herausgestellt, dass mit der an Hand der Fig. 1 beschriebenen Ausführungsform Röhren zu massiven Stäben kontrahiert werden können. Das Verfahren erfordert jedoch eine äusserst genaue Überwachung zum Erhalten einer symmetrischen Erhitzung.

An Hand der Fig. 2 wird deswegen eine Ausführungsform beschrieben, die sich in der Praxis erwiesen hat.

Der in Fig. 2 dargestellte Plasmabrenner 21 besteht im wesentlichen aus einer vertikal angeordneten Quarzglasröhre 22 mit einem Teller 23, ebenfalls aus Quarzglas und einer Spule 24 aus einem Kupferrohr. Die Röhre 22 und die Spule 24 können gegenübereinander bewegt werden. Durch die Öffnung in dem Rohr 24 wird im Betrieb der Vorrichtung Wasser zur Kühlung eingeführt. Die Spule 24 ist mit einem (nicht dargestellten) HF-Generator verbunden. Der Plasmabrenner 21 wird mit Hilfe einer nicht dargestellten Vorrichtung an dem Rohr 26 entlang hin- und herbewegt. (Siehe Doppelpfeil auf der Bodenseite der Figur).

Beim Zünden des Plasmas befindet sich die Spule 24 halbwegs der Glasröhre 22, über die Zufuhr 27 wird Argon in den Brenner eingeblasen. Nachdem das Plasma gezündet ist, wird die Spule 24 in der dargestellten Lage gegenüber der Röhre 22 gebracht und wird über die Zufuhr 28 und den Kanal 28A, der durch schräg gerichtete Kanäle mit dem Innern des Brenners in Verbindung steht, ein molekulares Gas eingeblasen. Dabei tritt die Plasmaflamme 29 aus dem Brenner 21 heraus und lässt das sich drehende Rohr 26 sich kontrahieren. Durch die von der Seite her eingeblasene Luft entsteht eine Wirbelung in dem Brenner, wodurch das Plasma zu der Achse der Röhre 22 gedrückt wird, so dass diese Röhre 22 nicht zu hoch erhitzt wird. Im Boden des Brenners befindet sich eine poröse Platte 30 die dafür sorgt, dass keine Staubteilchen in den Brennerraum gelangen und dass der Argonstrom gleichmässig in dem von der Röhre 22 eingeschlossenen Raum verteilt wird, wodurch ein laminarer Gasstrom entsteht. Die Folge davon ist, dass eine gleichmässig brennende Plasmaflamme erhalten wird und durch die Öffnung, durch welche die Flamme aus dem Brenner heraustritt, keine Luft in die Röhre 22 eingesaugt wird.

Mit Hilfe der Vorrichtung nach Fig. 2 wurden u. a. die folgenden Resultate erzielt.

Ein auf der Innenseite mit dotiertem ($GeO_2$) Quarzglas durch ein Niederschlagsverfahren verkleidetes Quarzglasrohr mit einem Innendurchmesser von 16,4 mm und mit einem Aussendurchmesser von 25,2 mm und mit einer Länge von 70 cm wurde zu einem massiven Stab dadurch kollabiert, dass der Plasmabrenner zweimal an das Rohr entlang bewegt wurde. Während des ersten Laufes, in diesem Fall bei dem horizontal angeordneten Rohr 26 von links nach rechts, betrug die Geschwindigkeit, mit der das Plasma an dem Rohr entlang bewegt wurde: 1,8 cm/Minute. Wenn das Plasma das Ende des zu kollabierenden Rohrteils erreicht hat, wird es schnell in die Ausgangslage zurückgebracht, wobei das Rohr 26 nicht wesentlich erhitzt wird. Bei dem nächsten Lauf (von links nach rechts) betrug die Bewegungsgeschwindigkeit des Plasmas 0,3 cm/Minute. Das Rohr war nun völlig geschlossen. Der Abbrennverlust betrug 14,1 Gew.-%. Die Drehgeschwindigkeit betrug 1 Umdrehung/Sekunde. In einem anderen Ausführungsbeispiel wurde ein auf der Innenseite mit dotiertem Quarzglas verkleidetes Quarzglasrohr ebenfalls in zwei Schritten kollabiert. Der Aussendurchmesser betrug 25 mm, der Innendurchmesser 21 mm, die zu kollabierende Rohrlänge 70 cm. Die Bewegungsgeschwindig keit des Plasmas betrug während des ersten Laufes 3,5 cm/Minute; während des zweiten Laufes 1,8 cm/Minute. Der Abbrennverlust betrug 10 %. Die Drehgeschwindigkeit betrug in diesem Fall 2 Umdrehungen/Sekunde. In beiden Fällen bestand das Plasmagas während beider Läufe aus einem Argon-Luft-Gemisch (33 % - 67 %). Die Temperatur des Plasmas betrug mindestens 10 000° K. Das Plasma beeinträchtigt die optischen Eigenschaften der aus den kollabierten Vorformen gezogenen Fasern nicht.

**Patentansprüche**

1. Verfahren zum Herstellen massiver gläserner Vorformen zum Herstellen optischer Elemente wobei eine hohle Vorform aus einem an der Innenseite mit dotiertem Quartzglas beschihteten Quarzglasrohr (6, 26) mit einer für das gesetzte Ziel geeigneten Änderung der Brechzahl über die Wanddicke durch Erhitzung kontrahiert wird unter Anwendung einer Wärmezone, deren Abmessung in der Längsrichtung der Vorform kleiner als der zu kontrahierende Teil derselben ist und die Wärmezone und die hohle Vorform (6, 26) relativ zu einander in der Langsrichtung der Vorform bewegt werden, dadurch gekennzeichnet, dass die hohle Vorform (6, 26) beim Kontrahieren an der Aussenseite mit einem Plasma (8, 29) erhitzt wird.

2. Verfahren nach Anspruch 1, dadurch gekennzeichnet dass das Plasmagas des Plasmas ein molekulares Gas ist.

3. Verfahren nach Anspruch 2, dadurch gekennzeichnet, dass das plasmagas Stickstoff, Sauerstoff oder Gemische dieser Gase aufweist.

4. Verfahren nach Anspruch 3, dadurch gekennzeichnet, dass das Plasmagas ausser einem oder mehreren molekularen Gasen auch ein Inertgas aufweist.

5. Verfahren nach Anspruch 4, dadurch gekennzeichnet, dass das Inertgas Argon ist.

6. Verfahren nach Anspruch 5, dadurch gekennzeichnet, dass das Plasmagas 67 Gew.-%. Luft, für den Rest Argon aufweist.

7. Verfahren nach Anspruch 1, dadurch gekennzeichnet, dass die hohle Vorform beim Kontrahieren in horizontaler Lage gehalten wird.

8. Verfahren nach Anspruch 7, dadurch gekennzeichnet, dass die hohle Vorform beim Kontrahieren gedreht wird.

9. Verfahren nach Anspruch 8, dadurch gekennzeichnet, dass die hohle Vorform mit einer Umdrehungsgeschwindigkeit von 0,5 bis 5 Umdrehungen/Sekunde, vorzugsweise 0,5 - 2 Umdrehungen/Sekunde gedreht wird.

10. Verfahren nach Anspruch 8, dadurch gekennzeichnet, dass die Erhitzung mit einem Plasmabrenner (21) erfolgt, wobei die Strömungsrichtung des Plasmagases (29) in einem Winkel über 0° auf die Achse der hohlen Vorform (26) gerichtet ist.

11. Verfahren nach Anspruch 10, dadurch gekennzeichnet, dass die Strömungsrichtung des Plasmages (29) in einem Winkel von etwa 90° auf die Achse der hohlen Vorform (26) gerichtet ist.

12. Verfahren nach Anspruch 11, dadurch gekennzeichnet, dass der Plasmabrenner (21) derart angeordnet ist, dass die Achse des Brenners nicht horizontal liegt und derjenige Teil des Brenners, aus dem die Plasmaflamme heraustritt, nach oben gerichtet ist.

13. Verfahren nach Anspruch 12, dadurch gekennzeichnet, dass die Achse des Brenners senkrecht auf die Horizontalebene gerichtet ist.

14. Verfahren nach Anspruch 1, dadurch gekennzeichnet, dass das Plasma in nur einer Richtung mit einer ausreichend niedrigen Geschwindigkeit um eine Kontraktion durch Erhitzung der hohlen Vorform zu bewirken an der hohlen Vorform entlang bewegt wird, das Plasma nach dem Erreichen des Endes des zu kontrahierenden Vorformteils in der anderen Richtung mit einer ausreichend hohen Geschwindigkeit in die Ausgangslage zurückbewegt wird, um eine wesentliche Wärmeübertragung bei dieser Bewegung zu vermeiden und dass daraufhin dies alles wiederholt wird, bis ein massiver Stab erhalten worden ist.

15. Verfahren nach Anspruch 12, dadurch gekennzeichnet, dass die Geschwindigkeit mit der das Plasma beim Kontrahieren an der hohlen Vorform entlang bewegt wird, bei jedem nachfolgenden Kontraktionsschritt kleiner ist als bei dem vorhergehenden Kontraktionsschritt.

**Claims**

1. A method of manufacturing solid glass preforms for the manufacture of optical components, in which a hollow preform consisting of a quartz glass tube (6, 26) which is coated on the inside with doped quartz glass and which has a variation of the refractive index across the wall thickness which is suitable for the desired end, is collapsed by heating using a heating zone the dimension of which in the longitudinal direction of the preform being smaller than the part thereof to be collapsed, and the heating zone and the hollow preform (6, 26) being moved relative to each other in the longitudinal direction of the preform, characterized in that during the collapsing process the hollow preform (6, 26) is heated externally by means of a plasma (8, 29).

2. A method as claimed in claim 1, characterized in that the plasma gas is a molecular gas.

3. A method as clamed in claim 2, characterized in that the plasma gas comprises nitrogen, oxygen or mixtures of these gases.

4. A method as claimed in claim 3, characterized in that in addition to one or more molecular gases the plasma gas also comprises an inert gas.

5. A method as claimed in claim 4, characterized in that the inert gas is argon.

6. A method as claimed in claim 5, characterized in that the plasma gas comprises 67 % by weight of air, the remainder being argon.

7. A method as claimed in claim 1, characterized in that the hollow preform during collapsing is kept horizontally.

8. A method as claimed in claim 7, characterized in that during collapsing the hollow preform is rotated.

9. A method as claimed in claim 8, characterized in that the hollow preform is rotated at a speed of rotation of 0.5 to 5 rps, preferably 0.5 - 2 rps.

10. A method as claimed in claim 8, characterized in that heating is carried out by means of a plasma burner (21) the direction of flow of the plasma gas (29) is directed at the axis of the hollow preform (26) at an angle exceeding 0°.

11. A method as claimed in claim 10, characterized in that the direction of flow of the plasma gas (29) is directed at an angle of approximately 90° to the axis of the hollow preform (26).

12. A method as claimed in claim 11, characterized in that the plasma burner (21) is arranged so that the axis of the burner is not horizontal and the part of the burner where the plasma flame emanates is directed upwardly.

13. A method as claimed in claim 12, characterized in that the axis of the burner is directed perpendicular to the horizontal plane.

14. A method is claimed in claim 1, characterized in that the plasma is moved past the hollow preform in only one direction at a sufficiently low speed to produce collapsing by heating of the hollow preform, the plasma after reaching the end of the part of the preform to be collapsed is then moved back in the opposite direction at a sufficiently high speed towards the initial position so that a substantial heat transfer during said movement is avoided and this procedure being repeated until a solid rod has been obtained.

15. A method as claimed in claim 12, characterized in that the speed at which the plasma during collapsing is moved past the hollow preform is smaller in each subsequent collapsing step than in the preceding collapsing step.

**Revendications**

1. Procédé pour la réalisation d'ébauches massives en verre pour la réalisaton d'éléments optiques selon lequel une ébauche creuse constituée par un tube en verre de quartz recouvert à l'intérieur de verre de quartz dopé présentant une variation de l'indice de réfraction appropriée au but visé sur l'épaisseur de la paroi est contractée par chauffage à l'aide d'une zone thermique dont la dimension, mesurée dans la direction longitudinale de l'ébauche, est inférieure à celle de la partie à contracter de cette dernière et la zone thermique et l'ébauche creuse sont déplacées l'une par rapport à l'autre dans la direction longitudinale de l'ébauche, caractérisé en ce que la face extérieure de l'ébauche creuse (6, 26) est chauffée à l'aide d'un plasma (8, 29) pendant la contraction.

2. Procédé selon la revendication 1, caractérisé en ce que le gaz de plasma est un gaz moléculaire.

3. Procédé selon la revendication 2, caractérisé en ce que le gaz de plasma est de l'azote, de l'oxygène ou un mélange de ces gaz.

4. Procédé selon la revendication 3, caractérisé en ce qu'outre un ou plusieurs gaz moléculaires, le gaz de plasma contient également un gaz inerte.

5. Procédé selon la revendication 4, caractérisé en ce que le gaz inerte est de l'argon.

6. Procédé selon la revendication 5, caractérisé en ce que le gaz de plasma contient en poids 670 % d'air, le reste étant de l'argon.

7. Procédé selon la revendication 1, caractérisé en ce que l'ébauche creuse est obtenue pendant la contraction de la position horizontale.

8. Procédé selon la revendication 7, caractérisé en ce que l'ébauche creuse est tournée pendant la contraction.

9. Procédé selon la revendication 8, caractérisé en ce que l'ébauche creuse est tournée à une vitesse de rotation de 0,5 à 5 révolutions/seconde, de préférence 0,5 à 2 révolutions/seconde.

10. Procédé selon la revendication 8, caractérisé en ce que le chauffage s'effectue à l'aide d'un brûleur de plasma (21), la direction de circulation du gaz de plasma (29) étant dirigée de façon à former un angle supérieur 0° par rapport à l'axe de l'ébauche creuse (26).

11. Procédé selon la revendication 10, caractérisé en ce que la direction de circulation du gaz de plasma (29) est dirigée de façon à former un angle d'environ 90° par rapport à l'axe de l'ébauche creuse (26).

12. Procédé selon la revendication 11, caractérisé en ce que le brûleur de plasma (21) est disposé de façon que l'axe du brûleur ne se situe pas horizontalement et que la partie du brûleur, dont sort la flamme de plasma soit dirigée vers le haut.

13. Procédé selon la revendication 12, caractérisé en ce que l'axe du brûleur est dirigé perpendiculairement au plan horizontal.

14. Procédé selon la revendication 1, caractérisé en ce que le plasma n'est déplacé le long de l'ébauche creuse que dans une direction à une vitesse suffisamment basse pour provoquer la contraction par chauffage de l'ébauche creuse et en ce qu'après que l'extrémité de la partie d'ébauche à contracter est atteinte, le plasma est déplacé dans l'autre direction à une vitesse suffisamment élevée dans la position de sortie pour éviter une transmission essentielle de la chaleur pendant ce déplacement, après quoi tous cela est répété jusqu'à l'obtention d'une barre massive.

15. Procédé selon la revendication 12, caractérisé en ce que la vitesse à laquelle le plasma est déplacé le long de l'ébauche creuse pendant la contraction est plus petite à chaque étape de construction suivante qu'à l'étape de contraction précédente.

**FIG.1**

**FIG.2**